# EUROPÄISCHE PATENTSCHRIFT

(11) **EP 4 019 374 B1**
(45) Veröffentlichungstag und Bekanntmachung des Hinweises auf die Patenterteilung: **12.08.2026**
(21) Anmeldenummer: 21208137.6
(22) Anmeldetag: 15.11.2021
(51) Int. Cl.: B62J 7/06, B62J 11/00, B62K 21/06, B62J 6/03

(54) **SYSTEM ZUR ANBRINGUNG EINES ZUBEHÖRTEILS AN EINEM FAHRRAD**
SYSTEM FOR ATTACHING AN ACCESSORY TO A BICYCLE
SYSTÈME DE FIXATION D'UN ACCESSOIRE À UNE BICYCLETTE

(30) Priorität: 22.12.2020 DE 202020107472 U
(43) Veröffentlichungstag der Anmeldung: 29.06.2022
(73) Patentinhaber: MPR GmbH & Co. KG, 95615 Marktredwitz (DE)
(72) Erfinder: Pürner, Marcus, Marktredwitz (DE)
(74) Vertreter: Friderichs, Gunther

(56) Entgegenhaltungen:
- DE-U1- 202018 101 912
- FR-A- 1 052 538
- US-A- 4 946 181
- US-A- 5 297 811
- UNKNOWN: "Busch + Müller Lampenhalter 471B/1PB für 1 1/8" Steuersatz Kunststoff | Bike-Packing.de", 24 September 2020 (2020-09-24), pages 1 - 8, XP093180356, Retrieved from the Internet <URL:https://web.archive.org/web/20200924055826/https://www.bike-packing.de/busch-mueller-lampenhalter-471b-1pb-fuer-1-1-8-steuersatz-kunststoff> [retrieved on 20240628]

## Beschreibung

### Gebiet der Erfindung

Die Erfindung betrifft ein System zur Anbringung eines Zubehörteils vor dem Lenker eines Fahrrads. Insbesondere betrifft die Erfindung ein System zur Befestigung eines vorderen Gepäckträgers sowie einen für das System ausgebildeten Gepäckträger und ein mit dem System ausgerüstetes Fahrrad.

### Hintergrund der Erfindung

Bei Fahrrädern sind neben Gepäckträgern, die über dem Hinterrad angeordnet sind, auch Gepäckträger bekannt, welche an bzw. vor dem Lenker des Fahrrads angeordnet sind.

Insbesondere gibt es Körbe, welche an der Lenkerstange befestigt werden können. Derartige Körbe haben den Vorteil, dass diese auf die Lenkerstange aufsetzbar sind, ohne dass hierfür eine besondere Schnittstelle zur Befestigung am Lenker vorhanden sein muss.

Nachteil für die Fahrdynamik ist allerdings, dass sich der Korb zusammen mit dem Lenker mitdreht.

Des Weiteren neigt ein derartiger eingehängter Korb zum Klappern und kann sich bei schlechten Wegstrecken sogar vom Lenker lösen. Zur Beförderung von schwerem Gepäck sind derartige Körbe nur bedingt geeignet.

Befestigungssysteme für Fahrradbauteile sind aus folgendem Stand der Technik bekannt:
DE 20 2018 101912 U1,
US 5 297 811 A,
US 4 946 181 A,
FR 1 052 538,
"Busch + Müller Lampenhalter 471B/1PB für 1 1/8" Steuersatz Kunststoff | Bike-Packing.de",, 24. September 2020 (2020-09-24), Seiten 1-8, XP093180356, Gefunden im Internet: URL https://web.archive.org/web/20200924055826/https://www.bikepac king.de/busch-mueller-lampenhalter-471b-1pb-fuer-1-1-8-steuersatzkunststoff

### Aufgabe der Erfindung

Der Erfindung liegt demgegenüber die Aufgabe zugrunde, die genannten Nachteile des Standes der Technik zu reduzieren.

Es ist insbesondere eine Aufgabe der Erfindung ein Befestigungssystem, insbesondere für Gepäckträger, bereitzustellen, welches eine einfache und sichere Befestigung ermöglicht, ohne dass sich der Gepäckträger mit dem Lenker mitdreht. Auf Befestigungselemente an dem Rahmen selbst soll gemäß einem weiteren Aspekt der Erfindung verzichtet werden.

### Zusammenfassung der Erfindung

Die Aufgabe der Erfindung wird bereits durch ein System zur Anbringung eines Zubehörteils an einem Fahrrad, durch eine für das System ausgebildete Lagerschale sowie durch ein für das System ausgebildetes Zubehörteil und einen für das System ausgebildeten Klemmring gelöst.

Bevorzugte Ausführungsformen und Weiterbildungen der Erfindung sind dem Gegenstand der abhängigen Ansprüche, der Beschreibung sowie den Zeichnungen zu entnehmen.

Die Erfindung betrifft ein System zur Anbringung eines Zubehörteils an einem Fahrrad.

Unter einem Fahrrad im Sinne der Erfindung werden auch tretkurbelbetriebene Fahrzeuge mit einem elektrischen Hilfsantrieb, also insbesondere sogenannte E-Bikes und Pedelecs verstanden. Weiter bezieht sich die Erfindung auch auf mehrspurige tretkurbelbetriebene Fahrzeuge, wie beispielsweise Lastenräder, insbesondere Lastenräder mit zwei Hinterrädern.

Das Fahrrad umfasst einen Rahmen. Insbesondere umfasst das Fahrrad einen Rahmen mit zumindest einem Steuerrohr, einem Unterrohr, einem Sitzrohr zum Aufnehmen der Sattelstütze sowie Kettenstreben und Sitzstreben, an denen das Ausfallende für das Hinterrad angebracht ist.

Das Fahrrad umfasst des Weiteren einen Steuersatz mit einem oberen und einem unteren Lager, über den ein Gabelschaft drehbar in einem Steuerrohr des Fahrradrahmens angeordnet ist.

Der Steuersatz dient also der Verbindung von Lenker und Gabel mit dem Rahmen, wobei ein Gabelschaft drehbar im Steuerrohr angeordnet ist.

Ein derartiger Steuersatz umfasst üblicherweise zwei voneinander beabstandete Wälzlager, welche oben und unten im Steuerrohr sitzen.

Der Schaft der Gabel ist über die Wälzlager drehbar im Steuerrohr gelagert und des Weiteren mit dem Vorbau verbunden, welcher seinerseits für die Anbringung des Lenkers genutzt wird.

Als übliche Bauform für derartige Steuersätze haben sich sogenannte Ahead-Steuersätze durchgesetzt. Diese umfassen eine in den Gabelschaft geschlagene Kralle, über die der Steuersatz mittels einer zentralen Spannschraube in axialer Richtung vorgespannt werden kann.

Insbesondere gibt es derartige Ahead-Steuersätze mit sogenannten Cartridge-Lagern. Dies sind gekapselte und abgedichtete Kugellager, insbesondere Schräg- oder Rillenkugellager.

Derartige Lager, insbesondere derartige Wälzlager, umfassen eine äußere Lagerschale sowie eine innere Lagerschale. Die Kugeln bzw. bei einem Cartridge-Lager das abgedichtete Wälzlager sitzt dabei zwischen innerer und äußerer Lagerschale.

Gemäß der Erfindung ist das Zubehörteil an einer oberen und/oder einer unteren Lagerschale des Steuersatzes befestigt.

Die Erfindung sieht also vor, nicht den Lenker nebst Vorbau oder das Steuerrohr, welches Teil des Rahmens ist, sondern die äußeren Lagerschalen des Steuersatzes zur Befestigung des Zubehörteils zu nutzen.

Dies hat den Vorteil, dass der Rahmen unangetastet bleibt. Insbesondere müssen keine aufwendigen oder, wenn das Zubehörteil nicht befestigt ist, optisch unschönen Bauelemente an dem Steuerrohr befestigt sein.

Vielmehr können auch in der Regel robust ausgebildete Lagerschalen selbst zur Befestigung eines Zubehörteils verwendet werden.

Dies ermöglicht eine einfache und sichere Befestigung, ohne dass ein Befestigungselement auf den Rahmen greifen muss und stellt gleichzeitig ein System bereit, bei welchem sich das Zubehörteil nicht mit dem Lenker mitdreht.

Bei einer bevorzugten Ausführungsform der Erfindung hat die obere und/oder untere Lagerschale ein Formschlusselement für das Zubehörteil.

Insbesondere ist vorgesehen, dass ein Formschlusselement an einer Lagerschale vorgesehen ist, welches in Zusammenwirken mit einem komplementär ausgebildeten Formschlusselement des Zubehörteils einen Formschluss in axialer Richtung bereitstellt.

Das Formschlusselement kann insbesondere als zumindest eine umlaufende Nut oder als umlaufender Steg ausgebildet sein.

Dies ermöglicht gemäß einer Ausführungsform der Erfindung eine Verdrehbarkeit des Zubehörteils um die Achse des Steuerrohrs.

Diese Ausgestaltung erleichtert eine flexible Anbringung, wobei gemäß einer Ausführungsform der Erfindung eine Verdrehsicherung allein klemmschlüssig bereitgestellt wird.

Gemäß einer anderen Ausführungsform der Erfindung ist vorgesehen, dass das Zubehörteil durch einen Formschluss verdrehgesichert mit zumindest einer Lagerschale verbunden ist.

Vorzugsweise ist die Nut konisch ausgebildet. Dies erleichtert die Ausrichtung eines korrespondierenden Formschlusselements.

Die Nut ist insbesondere als halbkreisförmige Nut, vorzugsweise mit einem Durchmesser von 1 bis 3 mm, besonders bevorzugt von 1,5 bis 2 mm, ausgebildet.

Eine derartige Nut hat keine scharfen Kanten und ist bei abgenommenem Zubehörteil optisch nahezu gar nicht als Befestigungselement erkennbar. So sind ringförmige Nuten als Funktions- oder Designelemente bei derartigen Lagern üblich.

Bei einer Ausführungsform der Erfindung ist ein Zubehörteil sowohl an der oberen als auch an der unteren Lagerschale befestigt.

Diese Ausführungsform der Erfindung eignet sich insbesondere zur Anbringung von Gepäckträgern, da über zwei vertikal voneinander beabstandete Befestigungspunkte eine besonders stabile Verbindung bereitgestellt wird.

Zur Anbringung von kleineren Zubehörteilen, wie beispielsweise Befestigungsaufnahmen für ein Mobilgerät oder für eine Leuchte, genügt dagegen die Befestigung an lediglich einer einzigen Lagerschale.

Bei einer bevorzugten Ausführungsform der Erfindung umfasst das System einen Klemmring, welcher an der oberen und/oder an der unteren Lagerschale anbringbar ist.

Gemäß einer Ausführungsform der Erfindung kann der Klemmring als einfache Klemmschelle ausgebildet sein.

Vorzugsweise ist der Klemmring aber als geteilter Klemmring, insbesondere mit einem Schwenklager zwischen zwei Hälften des Klemmrings, ausgebildet.

Ein derartiger geteilter Klemmring ist leicht anzubringen und kann insbesondere auf einer inneren Anlagefläche ein Formschlusselement zumindest zur axialen Sicherung aufweisen.

Der Klemmring hat vorzugsweise in etwa dieselbe Höhe wie der außen liegende Teil der Lagerschale.

Insbesondere hat der Klemmring eine Höhe von 7 bis 20 mm.

Obere und untere Lagerschale können einen voneinander unterschiedlichen Durchmesser haben.

Insbesondere hat die untere Lagerschale oft einen größeren Durchmesser wie die obere Lagerschale.

Gemäß einer Ausführungsform der Erfindung umfasst das System einen entsprechend angepassten oberen und unteren Klemmring, deren Durchmesser dementsprechend unterschiedlich ist und auf die jeweilige Lagerschale angepasst ist.

Vorzugsweise sind aber die Klemmbacken, mittels der die Klemmringe feststellbar sind, derart ausgebildet, dass diese im Wesentlichen die gleiche Breite b aufweisen.

Dies hat den Vorteil, dass im Bereich der Klemmbacken einheitlich ein Zubehörteil angebracht werden kann.

Das Zubehörteil ist vorzugsweise über ein Spannmittel für den Klemmring, insbesondere über eine Spannschraube, befestigbar.

Gemäß dieser Ausführungsform der Erfindung kann das Spannmittel, insbesondere eine Spannschraube und/oder ein Schnellverschluss (z.B. mit Exzenter) genutzt werden, um sowohl den Klemmring an der oberen und/oder unteren Lagerschale festzulegen und dabei gleichzeitig den Klemmring mit dem Zubehörteil zu verbinden.

Das Zubehörteil kann gegenüber dem Steuerrohr drehbar sein, wobei mit dem Befestigen des Klemmrings das Zubehörteil befestigt wird.

So ist beispielsweise auch eine seitliche Anbringung, beispielsweise für eine Trinkflasche, möglich.

Gemäß einer weiteren Ausführungsform der Erfindung ist das Zubehörteil gegenüber dem Steuerrohr verschwenkbar. Das ist insbesondere bei Zubehörteilen mit einem Display nützlich.

Die Erfindung betrifft des Weiteren eine Lagerschale, welche für das vorstehend beschriebene System ausgebildet und insbesondere alle im Zusammenhang mit der Lagerschale beschriebenen Merkmale umfassen kann.

Insbesondere kann die Lagerschale eine umlaufende Nut umfassen.

Die Lagerschale kann insbesondere als teilintegrierte Lagerschale zum Einsetzen in das obere oder untere Ende des Steuerrohrs ausgebildet sein.

Weiter betrifft die Erfindung einen Steuersatz, welcher zumindest eine derartige Lagerschale umfasst.

Die Erfindung betrifft des Weiteren ein Fahrrad, welches vorstehend beschriebenen Steuersatz umfasst.

Die Erfindung betrifft des Weiteren ein Zubehörteil.

Das Zubehörteil ist gemäß der Erfindung als Gepäckträger ausgebildet, welcher sowohl mit einem unteren Klemmring an der unteren Lagerschale als auch mit einem oberen Klemmring an der oberen Lagerschale befestigbar ist.

Der Gepäckträger kann insbesondere eine vorzugsweise im Wesentlichen ebene Ablagefläche für Gepäck umfassen.

Die Ablagefläche kann sich insbesondere in etwa auf Höhe der unteren Lagerschale befinden.

Weiter kann der Gepäckträger eine Querstrebe umfassen, über die er mit der oberen Lagerschale verbunden ist.

So lässt sich ein derartiger Gepäckträger robust und einfach an dem Fahrrad befestigen.

Weiter betrifft die Erfindung einen Klemmring, welcher für vorstehend beschriebenes System ausgebildet ist und insbesondere die im Zusammenhang mit dem Klemmring beschriebenen Merkmale aufweisen kann.

Insbesondere kann der Klemmring auf seiner Innenseite zumindest ein Formschlusselement umfassen, welches komplementär zur Nut der Lagerschale ausgebildet ist.

Die Erfindung betrifft des Weiteren ein Set mit zwei derartigen Klemmringen, wobei einer der Klemmringe einen kleineren Innendurchmesser als der andere Klemmring hat.

Beide Klemmringe sind mittels aufeinander zu bewegbarer Spannbacken befestigbar, wobei die gesamte Breite der beiden Spannbacken bei beiden Klemmringen in etwa gleich ist.

So lässt sich für die bei einem Steuersatz in der Regel unterschiedlichen Durchmesser von oberer und unterer Lagerschale ein Set bereitstellen, bei welchem die Anbindung zum restlichen Zubehörteil identisch ist.

### Kurzbeschreibung der Zeichnungen

Der Gegenstand der Erfindung soll im Folgenden bezugnehmend auf ein Ausführungsbeispiel anhand der Zeichnungen Fig. 1 bis Fig. 9 erläutert werden.
Fig. 1 ist eine perspektivische Ansicht eines erfindungsgemäßen Systems zur Anbringung eines Zubehörteils, welches als Gepäckträger ausgebildet ist. Von dem Fahrradrahmen ist nur das Steuerrohr dargestellt.
Fig. 2 ist eine perspektivische Ansicht im Bereich des oberen Klemmrings.
Fig. 3 ist eine perspektivische Detailansicht von vorne.
Fig. 4 ist eine Detailansicht des Steuerrohrs ohne Klemmringe.
Fig. 5 ist ein mittiger Längsschnitt des Steuerrohrs.
Fig. 6 und Fig. 7 sind Längsschnitte der Klemmringe.
Fig. 8 ist eine perspektivische Ansicht eines Klemmrings.
Fig. 9 ist eine perspektivische, teils aufgeschnittene Ansicht des Klemmrings.

### Detaillierte Beschreibung der Zeichnungen

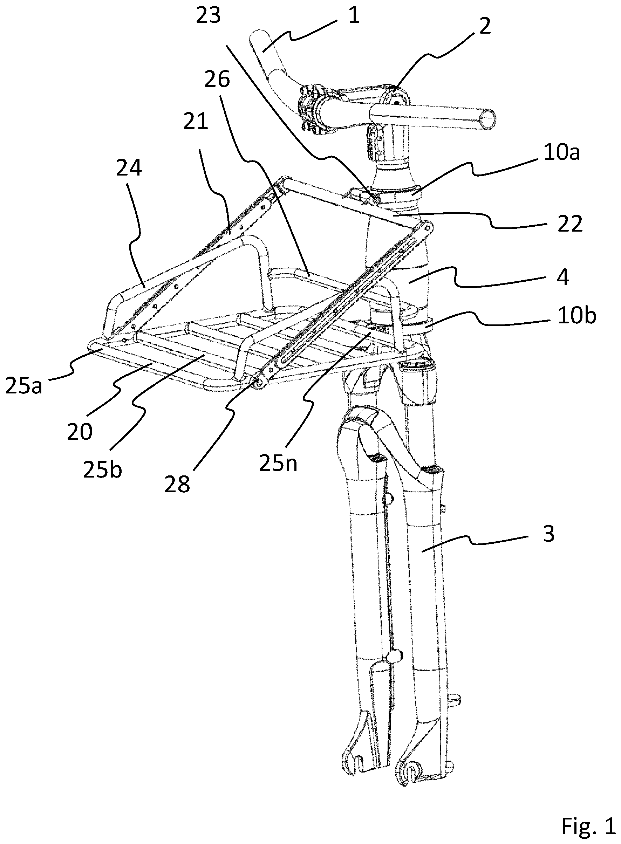

Fig. 1 zeigt in einer perspektivischen Ansicht die zum Verständnis der Erfindung relevanten Komponenten eines Fahrrads.

Von dem Fahrrad dargestellt ist lediglich das Steuerrohr 4, in welchem der Lenker 1, welcher über den Vorbau 2 mit der Gabel 3 verbunden ist, drehbar gelagert ist.

Es versteht sich, dass das Steuerrohr 4 mit dem restlichen Fahrradrahmen verbunden ist.

Als Zubehörteil ist ein Gepäckträger 20 vorne im Bereich des Steuerrohrs 4 am Fahrrad angebracht.

Hierzu ist der Gepäckträger 20 mit einem oberen Klemmring 10a und einem unteren Klemmring 10b am Steuersatz, genauer gesagt an den beiden äußeren Lagerschalen des Steuersatzes, angebracht.

Der Gepäckträger 20 umfasst eine ebene Ablagefläche, die in diesem Ausführungsbeispiel aus den Gitterstäben 25a bis 25n gebildet ist.

Seitliche Bügel 24, welche vorzugsweise ebenfalls aus einem Rohrmaterial ausgebildet sind, können das Gepäck gegen seitliches Herausrutschen sichern.

Der Gepäckträger 20 ist zum einen mit dem unteren Klemmring 10b an der unteren Lagerschale gesichert, indem die hinterste Gitterstrebe 25n mittels zwei Armen an den Klemmring 10b greift und so mit einem Spannmittel, beispielsweise einer Spannschraube (nicht dargestellt) zusammen mit dem Klemmring 10b befestigt ist.

Um auftretende Kippmomente abzufangen, ist der Gepäckträger 20 an der oberen Lagerschale mittels des Klemmrings 10a befestigt, welcher zunächst auf die Querstrebe 22 greift.

Die Querstrebe 22 ist ebenfalls über Arme auf dem Klemmring 10a gesichert.

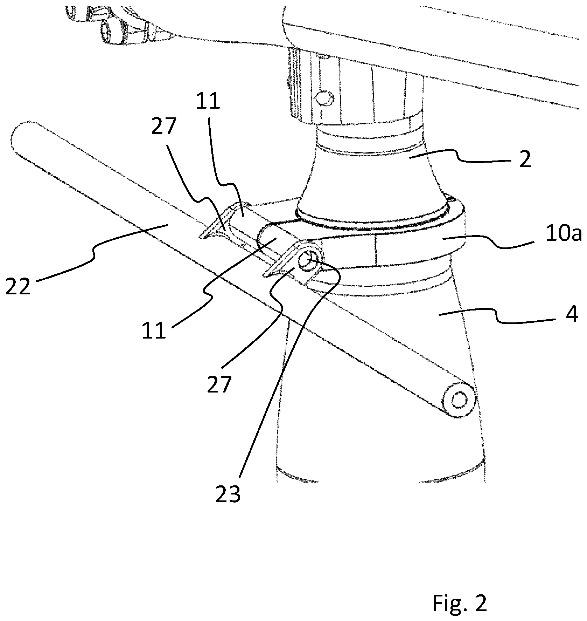

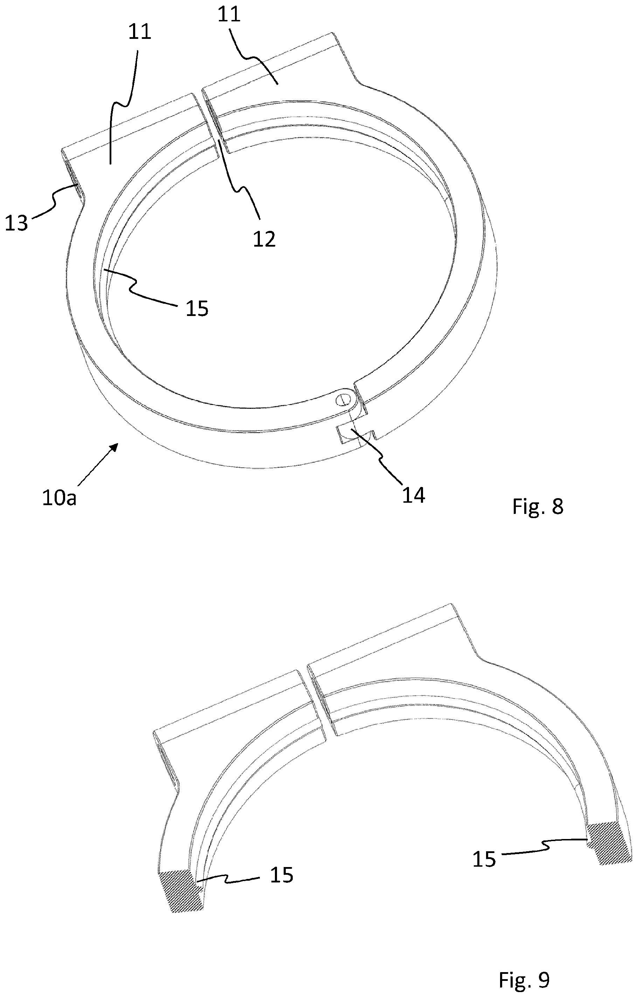

Dabei verläuft ein Durchgangsloch 23 sowohl durch die beiden Arme (27, siehe Fig. 2), als auch durch den Klemmring 10a (13, siehe Fig. 8)
Über seitliche Streben 21 ist die obere Strebe 22 an seitlichen Lagerpunkten 28 der ebenen Ablagefläche gesichert.

Die schräg verlaufenden Streben 21 können teleskopartig zusammenschiebbar sein, um sich unterschiedlichen Rahmengeometrien anzupassen.

Eine hintere Querstrebe 26, welche zwischen den beiden seitlichen Bügeln 24 verläuft, verhindert, dass Gepäck gegen das Steuerrohr 4 rutscht.

Fig. 2 ist eine perspektivische Ansicht im Bereich der oberen Lagerschale.

Der Klemmring 10a ist zwischen dem Steuerrohr 4 und dem Vorbau 2 angeordnet.

Der Klemmring 10a ist zweiteilig ausgebildet und umfasst die beiden aufeinander zu bewegbaren Spannbacken 11.

Um das Zubehörteil in diesem Ausführungsbeispiel mit der Querstrebe 22 zu montieren, weist das Zubehörteil die Arme 27 auf, welche die beiden Spannbacken 11 umgreifen.

Sodann wird ein Spannmittel, beispielsweise eine Spannschraube, durch das Durchgangsloch 23 eingeführt und festgezogen.

Der Klemmring 10a zieht sich fest und gleichzeitig ist das Zubehörteil an dem Klemmring 10a gesichert.

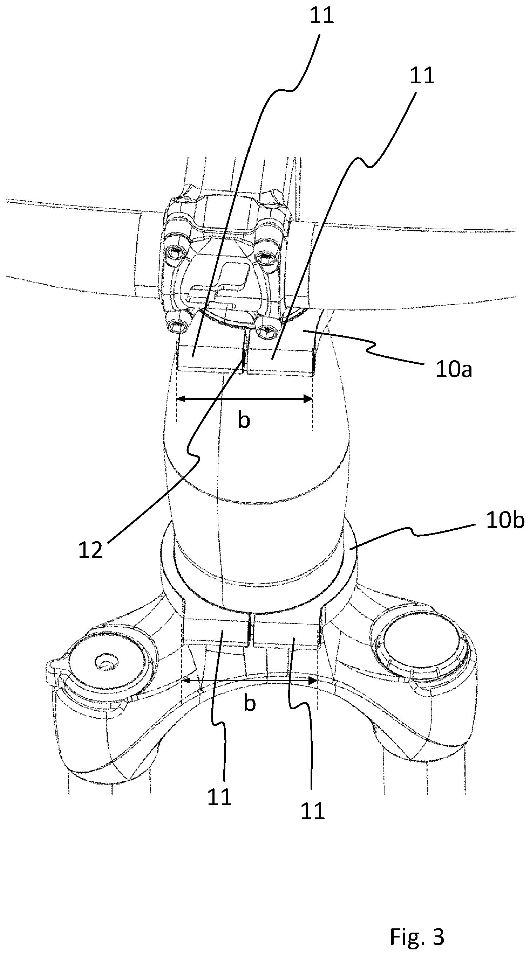

Fig. 3 ist eine perspektivische Detailansicht von vorne.

Zu erkennen ist, dass der obere Klemmring 10a einen kleineren Innendurchmesser als der untere Klemmring 10b aufweist.

Zumindest in diesem nicht festgezogenen Zustand befindet sich ein Spalt 12 zwischen den Spannbacken 11.

Die Gesamtbreite b der beiden Spannbacken 11 ist trotz des unterschiedlichen Durchmessers der Klemmringe 10a, 10b identisch. Mithin können die Arme (27) des Zubehörteils denselben Abstand voneinander aufweisen, egal wo dieses befestigt wird.

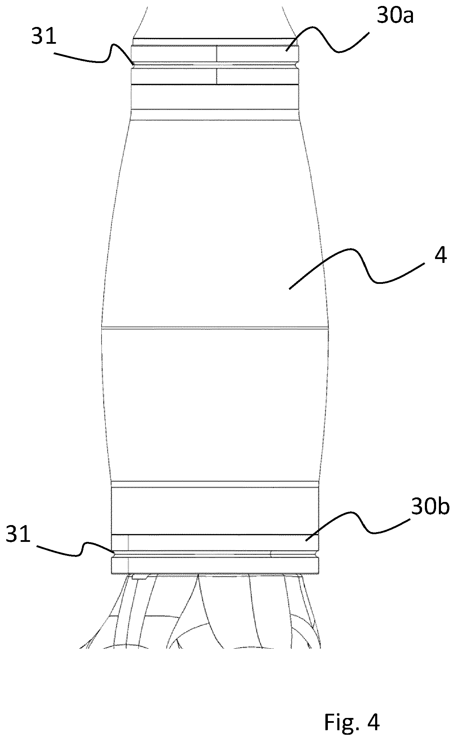

Fig. 4 ist eine Seitenansicht im Bereich des Steuerrohrs 4, wobei nunmehr das Zubehörteil abgenommen ist.

Nunmehr ist der Blick auf die beiden Lagerschalen 30a und 30b frei.

Die Lagerschalen 30a, 30b sind jeweils Teil eines Lagers, welchen den Gabelschaft 7 drehbar im Steuerrohr 4 lagert. Insbesondere können die Lagerschalen 30a, 30b dem Einbau eines Cartrigde-Lagers im Steuerrohr dienen.

Die Lagerschale 30a hat einen geringen Außendurchmesser als die Lagerschale 30b.

Beide Lagerschalen umfassen als Formschlussmittel eine Nut 31.

Die Nut 31 ist mittig in dem aus dem Steuerrohr 4 herausragenden Teil der Lagerschale 30a, 30b angeordnet.

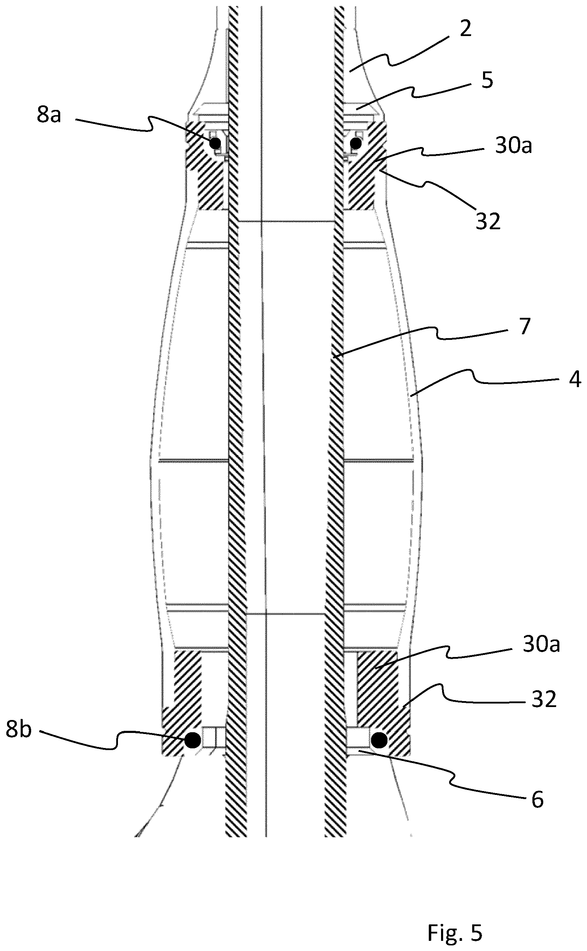

Fig. 5 ist ein Längsschnitt im Bereich des Steuerrohrs.

Dargestellt ist, dass sowohl die obere Lagerschale 30a als auch die untere Lagerschale 30b teilintegriert ausgebildet sind.

Die Lagerschalen umfassen jeweils eine Stufe 32, aber der sich der Außendurchmesser der jeweiligen Lagerschale 30a, 30b verringert.

Dieser Teil ist in das Steuerrohr 4 eingeschoben.

Oben schützt ein Staubring 5 das obere Wälzlager 8a. Von unten sichert der Zentrierring 6 das untere Wälzlager 8b.

Die Wälzlager 8a und 8b sind in dieser Ansicht nur schematisch dargestellt.

Vorzugsweise handelt es sich bei den Wälzlagern um sogenannte Cartridge-Lager.

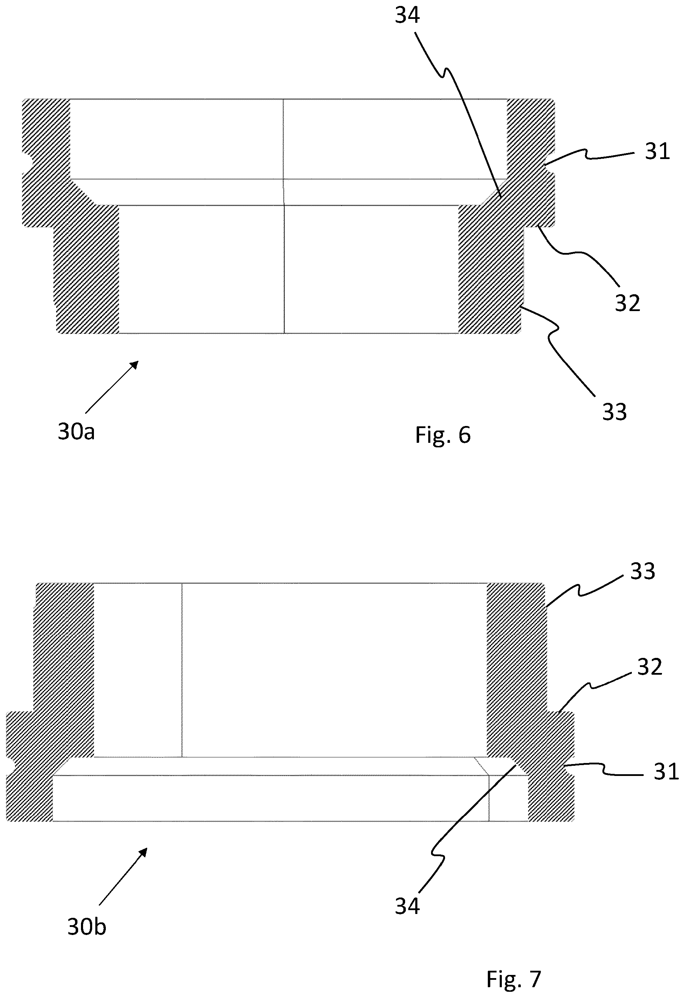

Fig. 6 ist ein Längsschnitt der oberen Lagerschale 30a.

Die obere Lagerschale 30a umfasst in dem aus dem Steuerrohr 4 herausragenden Teil die mittig angeordnete Nut 31.

Ab der Stufe 32 wird die Lagerschale 30a in das Steuerrohr eingeschoben, es handelt sich also um einen teilintegrierten Steuersatz.

In diesem Ausführungsbeispiel befindet sich vorne in Richtung Steuerrohr eine weitere Stufe 33, welche das Einführen erleichtert. An Stelle der Stufe 33 ist aber auch eine konische Ausgestaltung denkbar (nicht dargestellt).

Die hier dargestellte Ausführungsform einer Lagerschale 30a umfasst innenseitig im Bereich, in welchem das Wälzlager eingesetzt wird, eine Innenfase 34.

Diese hat in diesem Ausführungsbeispiel einen Winkel von 45°, was einer Aufnahme und Zentrierung eines Cartridge-Lagers dient (nicht dargestellt).

Wie in dem entsprechenden Längsschnitt gemäß Fig. 7 der unteren Lagerschale 30b dargestellt, ist die untere Lagerschale 30b bis auf die geometrischen Abmessungen identisch ausgebildet.

Die untere Lagerschale 30b ist länger und hat einen größeren Durchmesser.

Die Nut 31 ist aber vorzugsweise identisch ausgebildet.

Fig. 8 ist eine perspektivische Ansicht eines Klemmrings, in diesem Fall des Klemmrings 10a. Der andere Klemmring (10b) ist bis auf Geometrieunterschiede identisch ausgebildet.

Der Klemmring 10a ist zweiteilig ausgebildet. Die beiden Hälften des Klemmrings 10a sind über ein Schwenklager 14 miteinander verbunden.

So kann der Klemmring 10a auseinandergeklappt werden.

Zumindest im nicht festgezogenen Zustand befindet sich zwischen den beiden Spannbacken 11 ein Spalt 12, wenn der Klemmring 10a auf die Lagerschale gesetzt ist.

Beide Spannbacken 11 umfassen ein Durchgangsloch 13, durch welches eine Schraube (nicht dargestellt) geführt werden kann, um das Zubehörteil zu befestigen und gleichzeitig den Klemmring 10a festzuziehen.

Der innenseitig umlaufende Steg 15 greift dabei in die korrespondierende Nut der Lagerschale.

Vorzugsweise ist, wie insbesondere in der aufgeschnittenen Ansicht gemäß Fig. 9 gut zu erkennen, der Steg 15 konisch, also nach innen schmaler werdend, insbesondere im Querschnitt halbkreisförmig, ausgebildet.

Die an das Durchgangsloch 13 angrenzenden Anlageflächen für die Arme (27) des Zubehörteils sind vorzugsweise eben ausgebildet und verlaufen parallel zueinander.

Durch die Erfindung konnte ein Befestigungssystem, insbesondere für Gepäckträger bereitgestellt werden, bei dem keinerlei Veränderungen am Rahmen erforderlich sind. Das System umfasst lediglich Formschlusselemente an den äußeren Lagerschalen des Steuersatzes, welche aufgrund der Ausgestaltung als umlaufende Nut aber, sofern kein Zubehörteil angebracht ist, nahezu unsichtbar sind.

### Bezugszeichenliste

- 1: Lenker
- 2: Vorbau
- 3: Gabel
- 4: Steuerrohr
- 5: Staubring
- 6: Zentrierring
- 7: Gabelschaft
- 8a: oberes Wälzlager
- 8b: unteres Wälzlager
- 10a: oberer Klemmring
- 10b: unterer Klemmring
- 11: Spannbacke
- 12: Spalt
- 13: Durchgangsloch
- 14: Schwenklager
- 15: Steg
- 20: Gepäckträger
- 21: Strebe
- 22: Querstrebe
- 23: Durchgangsloch
- 24: seitlicher Bügel
- 25a-25n: untere Gitterstreben
- 26: hintere Querstrebe
- 27: Arm
- 28: Lagerpunkt

## Patentansprüche

1. System zur Anbringung eines Zubehörteils an einem Fahrrad mit einem Zubehörteil und einem oberen und einem unteren Lager mit einer äußeren Lagerschale, wobei das Zubehörteil als Gepäckträger, als Halter für ein Mobilgerät oder als Leuchte ausgebildet ist, wobei das Fahrrad einen Steuersatz mit dem oberen und dem unteren Lager umfasst, über den ein Gabelschaft drehbar in einem Steuerrohr des Fahrradrahmen angeordnet ist,
**dadurch gekennzeichnet, dass** das Zubehörteil an der oberen und/oder unteren Lagerschale des Steuersatzes befestigt ist, wobei das Zubehörteil an der äußeren Lagerschale befestigt ist und wobei sich das Zubehörteil nicht mit dem Lenker mitdreht.

2. System nach dem vorstehenden Anspruch, **dadurch gekennzeichnet, dass** die obere und/oder untere Lagerschale ein Formschlusselement für das Zubehörteil aufweist.

3. System nach dem vorstehenden Anspruch, **dadurch gekennzeichnet, dass** das Formschlusselement als umlaufende Nut, insbesondere als halbkreisförmige Nut, insbesondere mit einem Durchmesser von 1-3 mm, vorzugsweise von 1,5-2,0 mm, ausgebildet ist.

4. System nach einem der vorstehenden Ansprüche, **dadurch gekennzeichnet, dass** ein Zubehörteil sowohl an der oberen als auch an der unteren Lagerschale befestigt ist.

5. System nach einem der vorstehenden Ansprüche, **dadurch gekennzeichnet, dass** das System zumindest einem Klemmring umfasst, welcher an der oberen und/oder an der unteren Lagerschale anbringbar ist.

6. System nach dem vorstehenden Anspruch, **dadurch gekennzeichnet, dass** der Klemmring als geteilter Klemmring ausgebildet ist.

7. System nach einem der vorstehenden Ansprüche, **dadurch gekennzeichnet, dass** die obere Lagerschale gegenüber der unteren Lagerschale einen unterschiedlichen Durchmesser aufweist, wobei das System einen oberen und einen unteren Klemmring umfasst, deren Durchmesser jeweils auf die Lagerschale angepasst ist und wobei Klemmbacken, mittels der die Klemmringe festspannbar sind, im Wesentlichen die gleiche Breite b aufweist.

8. System nach einem der vorstehenden Ansprüche, **dadurch gekennzeichnet, dass** das Zubehörteil über ein Spannmittel, insbesondere über eine Spannschraube, des Klemmrings befestigbar ist,
und/oder dass das Zubehörteil um das Steuerrohr drehbar ist,
und/oder dass das Zubehörteil gegenüber dem Steuerrohr verschwenkbar ist.

9. Lagerschale, ausgebildet für ein System nach einem der vorstehenden Ansprüche, wobei eine äußere Lagerschale ein Formschlusselement für das Zubehörteil aufweist.

10. Steuersatz, umfassend zumindest eine Lagerschale nach dem vorstehenden Anspruch.

11. Fahrrad, umfassend einen Steuersatz nach dem vorstehenden Anspruch.

12. Zubehörteil ausgebildet für ein System nach einem der vorstehenden Ansprüche, wobei das Zubehörteil als Gepäckträger ausgebildet ist, welcher mit einem unteren Klemmring an der unteren Lagerschale und mit einem oberen Klemmring an der oberen Lagerschale befestigt ist.

13. Klemmring, ausgebildet für ein System nach einem der vorstehenden Ansprüche, wobei der Klemmring einen innenseitig umlaufenden Steg umfasst, der in eine korrespondierende Nut der Lagerschale greift.

14. Set, umfassend einen ersten sowie einen zweiten Klemmring nach dem vorstehenden Anspruch, wobei der erste Klemmring einen kleineren Innendurchmesser als der zweite Klemmring aufweist und wobei die Klemmringe Spannbacken umfassen, welche beide die gleiche Breite b haben.

## Claims

1. A system for attaching an accessory to a bicycle, comprising an accessory as well as an upper and a lower bearing each having an outer bearing shell, wherein the accessory is in the form of a luggage carrier, a holder for a mobile device or a lamp, the bicycle comprising a headset including said upper and lower bearings, by means of which a fork steerer tube is rotatably arranged in a head tube of the bicycle frame;
**characterised in that** the accessory is attached to the upper and/or lower bearing shell of the headset, wherein the accessory is attached to the outer bearing shell and wherein the accessory does not rotate together with the handlebar.

2. The system according to the preceding claim, **characterised in that** the upper and/or lower bearing shell comprises a positive-locking element for the accessory.

3. The system according to the preceding claim, **characterised in that** the positive-locking element is in the form of a circumferential groove, in particular a semi-circular groove, in particular having a diameter of 1 to 3 mm, preferably 1.5 to 2.0 mm.

4. The system according to any one of the preceding claims, **characterised in that** an accessory is attached to both the upper and the lower bearing shell.

5. The system according to any one of the preceding claims, **characterised in that** the system comprises at least one clamping ring which is attachable to the upper and/or lower bearing shell.

6. The system according to the preceding claim, **characterised in that** the clamping ring is in the form of a split clamping ring.

7. The system according to any one of the preceding claims, **characterised in that** the upper bearing shell has a different diameter from the lower bearing shell, the system comprising an upper and a lower clamping ring, the diameters of which are each adapted to the bearing shell, and wherein clamping jaws for tightening the clamping rings have substantially the same width b.

8. The system according to any one of the preceding claims, **characterised in that** the accessory can be fastened using a tightening means, in particular a clamping screw, of the clamping ring;
and/or **in that** the accessory is rotatable about the head tube;
and/or **in that** the accessory is pivotable relative to the head tube.

9. A bearing shell, configured for a system according to any one of the preceding claims, wherein an outer bearing shell comprises a positive-locking element for the accessory.

10. A headset, comprising at least one bearing shell according to the preceding claim.

11. A bicycle, comprising a headset according to the preceding claim.

12. An accessory, configured for a system according to any one of the preceding claims, wherein the accessory is in the form of a luggage carrier which is attached to the lower bearing shell by means of a lower clamping ring and to the upper bearing shell by means of an upper clamping ring.

13. A clamping ring, configured for a system according to any one of the preceding claims, wherein the clamping ring comprises an inner circumferential rib which engages in a corresponding groove of the bearing shell.

14. A set, comprising a first and a second clamping ring according to the preceding claim, wherein the first clamping ring has a smaller inner diameter than the second clamping ring, and wherein the clamping rings comprise clamping jaws, both of which have the same width b.

## Revendications

1. Système de fixation d'un accessoire à une bicyclette, comprenant un accessoire ainsi qu'un palier supérieur et un palier inférieur, chacun comportant une cuvette de palier extérieure, l'accessoire étant réalisé sous la forme d'un porte-bagages, d'un support pour appareil mobile ou d'une lampe, la bicyclette comprenant un jeu de direction comprenant les paliers supérieur et inférieur, par l'intermédiaire desquels un pivot de fourche est monté rotatif dans un tube de direction du cadre de la bicyclette,
**caractérisé en ce que** l'accessoire est fixé à la cuvette de palier supérieure et/ou inférieure du jeu de direction, l'accessoire étant fixé à la cuvette de palier extérieure et l'accessoire ne tournant pas avec le guidon.

2. Système selon la revendication précédente, **caractérisé en ce que** la cuvette de palier supérieure et/ou inférieure comprend un élément de liaison par complémentarité de forme pour l'accessoire.

3. Système selon la revendication précédente, **caractérisé en ce que** l'élément de liaison par complémentarité de forme est réalisé sous la forme d'une rainure circonférentielle, notamment une rainure semi-circulaire, notamment présentant un diamètre de 1 à 3 mm, de préférence de 1,5 à 2,0 mm.

4. Système selon l'une quelconque des revendications précédentes, **caractérisé en ce que** un accessoire est fixé à la fois à la cuvette de palier supérieure et à la cuvette de palier inférieure.

5. Système selon l'une quelconque des revendications précédentes, **caractérisé en ce que** le système comprend au moins une bague de serrage pouvant être montée sur la cuvette de palier supérieure et/ou inférieure.

6. Système selon la revendication précédente, **caractérisé en ce que** la bague de serrage est réalisée sous la forme d'une bague de serrage fendue.

7. Système selon l'une quelconque des revendications précédentes, **caractérisé en ce que** la cuvette de palier supérieure présente un diamètre différent de celui de la cuvette de palier inférieure, le système comprenant une bague de serrage supérieure et une bague de serrage inférieure dont les diamètres sont respectivement adaptés aux cuvettes de palier, et des mâchoires de serrage, au moyen desquelles les bagues de serrage peuvent être serrées, présentant essentiellement la même largeur b.

8. Système selon l'une quelconque des revendications précédentes, **caractérisé en ce que** l'accessoire peut être fixé par un moyen de serrage, notamment par une vis de serrage, de la bague de serrage,
et/ou **en ce que** l'accessoire est rotatif autour du tube de direction,
et/ou **en ce que** l'accessoire est pivotant par rapport au tube de direction.

9. Cuvette de palier, destinée à un système selon l'une quelconque des revendications précédentes, dans laquelle une cuvette de palier extérieure comprend un élément de liaison par complémentarité de forme pour l'accessoire.

10. Jeu de direction, comprenant au moins une cuvette de palier selon la revendication précédente.

11. Bicyclette, comprenant un jeu de direction selon la revendication précédente.

12. Accessoire, destiné à un système selon l'une quelconque des revendications précédentes, l'accessoire étant réalisé sous la forme d'un porte-bagages fixé à la cuvette de palier inférieure au moyen d'une bague de serrage inférieure et à la cuvette de palier supérieure au moyen d'une bague de serrage supérieure.

13. Bague de serrage, destinée à un système selon l'une quelconque des revendications précédentes, la bague de serrage comprenant une nervure circonférentielle interne qui s'engage dans une rainure correspondante de la cuvette de palier.

14. Ensemble, comprenant une première et une deuxième bague de serrage selon la revendication précédente, la première bague de serrage présentant un diamètre intérieur inférieur à celui de la deuxième bague de serrage, et les bagues de serrage comprenant des mâchoires de serrage qui présentent toutes deux la même largeur b.
